# EUROPEAN PATENT SPECIFICATION

(11) **EP 2 716 400 B1**
(45) Date of publication and mention of the grant of the patent: **05.04.2017**
(21) Application number: 11867096.7
(22) Date of filing: 01.06.2011
(51) Int. Cl.: B23K 31/00, B23K 26/20, B23K 33/00, G01B 17/00, G01N 29/04, B23K 26/24, B23K 31/12

(54) **WELDED JOINT STRUCTURE AND WELD QUALITY DETECTION METHOD**
SCHWEISSVERBINDUNGSSTRUKTUR UND SCHWEISSUNGSQUALITÄTSERKENNUNGSVERFAHREN
STRUCTURE DE RACCORD SOUDÉ ET PROCÉDÉ DE DÉTECTION DE QUALITÉ DE SOUDURE

(43) Date of publication of application: 09.04.2014
(73) Proprietor: Toyota Jidosha Kabushiki Kaisha, Toyota-shi, Aichi 471-8571 (JP)
(72) Inventor: IWATANI, Shingo, Toyota-shi Aichi 471-8571 (JP); UCHIDA, Keisuke, Toyota-shi Aichi 471-8571 (JP)
(74) Representative: D Young & Co LLP
(86) International application number: PCT/JP2011/062608
(87) International publication number: WO 2012/164701

(56) References cited:
- JP-A- 55 075 888
- JP-A- 61 062 663
- JP-A- 2001 047 232
- JP-A- 2001 047 232
- JP-A- 2010 014 554
- JP-U- H0 314 066

## Description

### TECHNICAL FIELD

The present invention relates to a differential gear unit for a vehicle, for example, and a joint structure by welding and a welding quality inspection method for inspecting the quality of the welding.

### BACKGROUND ART

As a conventional technique of this type, the following Patent Document 1 discloses a differential gear unit for a vehicle and a welding method of components thereof, for example. The Patent Document 1 discloses a technique as shown in a cross-sectional view in FIG. 11 in which a ring gear 62 is fitted and welded into a flange part 61 of a differential case. Here, one side face of the flange part 61 is provided with an annular protrusion (web) 63 that protrudes to a side of the ring gear 62 and in which the distal end abuts against one end face of the ring gear 62. With this web 63, an annular outer peripheral side clearance 64 and inner peripheral side clearance 65 are formed on an outer peripheral side and an inner peripheral side of the flange part 61 between the flange part 61 and the ring gear 62 that are assembled each other across the web 63. The outer peripheral side clearance 64 is supplied with an additive material including nickel, for example, and welded by a laser beam. By this welding, a local protrusion due to the outflow of the surplus additive material to the inner peripheral side clearance 65 is prevented from arising in the weld bead 66, and thus the weld bead 66 that has a smooth outer peripheral surface is formed. Furthermore, a butted part 69 in which an abutting surface 67 of the flange part 61 is butted on an abutting surface 68 of the ring gear 62 is provided in an inner side from the inner peripheral side clearance 65 described above. With this butted part 69, a strain behavior during welding processes is improved.

Additionally, the following Patent Document 2 discloses a method for inspecting a weld penetration depth of a welding part by using ultrasonic waves. It is considered that this inspection method is applied for the quality of the welding part disclosed in the Patent Document 1.

### PRIOR ART DOCUMENT

### PATENT DOCUMENT

Patent Document 1: EP Patent Application Publication No. 1719572
Patent Document 2: Japanese Patent Application Publication No. 6-167479
JP-A-2001047232 discloses a joint structure which does not comprise the features of the characterising portion of claim 1

### SUMMARY OF THE INVENTION

### PROBLEM TO BE SOLVED BY THE INVENTION

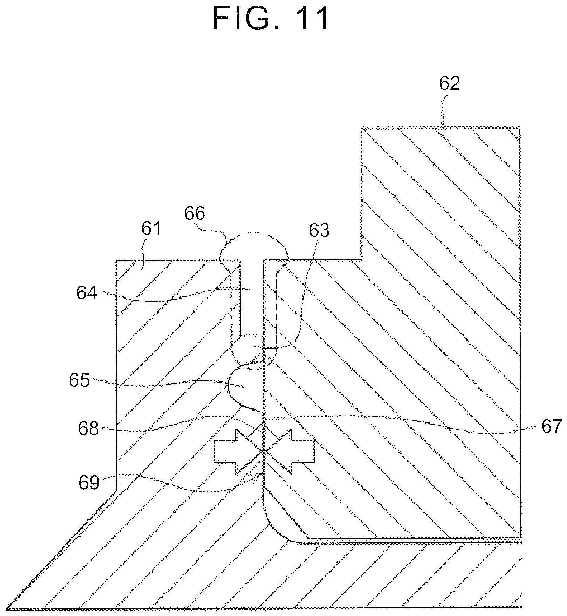

However, the welding method disclosed in the Patent Document 1 may cause the abutting surface 67 of the flange part 61 and the abutting surface 68 of the ring gear 62 remaining abutted against each other after the welding. Thus, as shown with arrows in FIG. 11, these abutting surfaces 67, 68 press against each other due to a solidification shrinkage during the welding, and a residual stress in a pulling direction may be produced. Consequently, the fatigue strength of the welding part may decrease during the operation of the differential gear unit due to the residual stress.

On the other hand, in the inspection method disclosed in the Patent Document 2, the welding quality may erroneously be determined due to the inspection depending on the inspection accuracy of an ultrasonic sensor. Furthermore, it is considered that unnecessary heat is input during the welding in order to prevent the erroneous determination; however, in this case, the cost of welding equipment may increase.

The present invention is made in view of the situation described above, and the object thereof is to improve the fatigue strength of the joint structure by welding and to improve the accuracy of the welding quality inspection.

### MEANS FOR SOLVING THE PROBLEM

(1) In order to achieve the foregoing object, the gist of a first aspect of the present invention is a joint structure by welding in which a butted part is provided between facing surfaces of the first member and the second member, two-stepped clearances adjacent to the butted part are provided, and a weld bead that is melted from a joint of the butted part which is positioned on an opposite side of the two-stepped clearances into the two-stepped clearances is formed in the butted part by welding, and in which other parts than the butted part are spaced apart from each other between the facing surfaces, and when a width of the weld bead is assumed to be "A", a width of a first level clearance of the two-stepped clearances that is adjacent to the butted part is assumed to be "B", and a width of a second level clearance of the two-stepped clearances that is adjacent to the first level clearance is assumed to be "C", the relation of "B < A/2 < C" is determined.
   According to the structure in the above item (1), when a width of the weld bead is assumed to be "A", a width of a first level clearance is assumed to be "B", and a width of a second level clearance is assumed to be "C", the relation of "B < A/2 < C" is determined. Thus, the weld penetration depth of the weld bead becomes greater than or equal to the length of the butted part and less than or equal to the total length of butted part and the first level clearance. Furthermore, other parts than the butted part are spaced apart from each other between the facing surfaces, and thus the butted part can be penetrated and welded with the weld bead, and the abutting surface disappears between the facing surfaces after the welding.
(2) In order to achieve the foregoing object, in the structure in the above item (1), it is preferable that the facing surfaces be formed into an annular shape; the butted part, the first level clearance, and the second level clearance be concentrically formed in sequence; and the weld bead that reaches the first level clearance be continuously formed in the butted part in a circumferential direction.
(3) In order to achieve the foregoing object, the gist of a second aspect of the present invention is a welding quality inspection method by using an ultrasonic sensor for the joint structure by welding according to claim 1 or 2, in which one end in an inspection range by the ultrasonic sensor is conformed to a boundary between the butted part and the first level clearance.
   According to the structure in the above item (3), one end in an inspection range by the ultrasonic sensor is conformed to a boundary between the butted part and the first level clearance, and thus when the butted part is not penetrated and welded with the weld bead, the weld bead is not detected by the ultrasonic sensor.
(4) In order to achieve the foregoing object, in the structure in the above item (3), it is preferable that the length of the first level clearance be made to be larger than or equal to the width in the inspection range by the ultrasonic sensor.

According to the structure in the above item (4), although the weld bead extending to the first level clearance is detected by the ultrasonic sensor, even if the actual weld bead is shortened due to influence of disturbance, the possibility that the weld bead is positioned in all inspection ranges (most part) by the ultrasonic sensor increases, and if the weld bead is positioned in all inspection ranges (most part), the possibility of the erroneous detection in which the weld bead does not exist decreases.

### EFFECT OF THE INVENTION

According to the structure in the above item (1) or (2), the fatigue strength of the joint structure by welding can be improved, and the erroneous determination due to variations in the welding quality inspection that uses the ultrasonic sensor can be reduced.

According to the either structure of the above item (3) or (4), the accuracy of the welding quality inspection can be improved.

### BRIEF DESCRIPTION OF THE DRAWINGS

[FIG. 1] FIG. 1 is a cross-sectional view that shows a differential gear unit for a vehicle according to one embodiment.
[FIG. 2] FIG. 2 is an enlarged cross-sectional view according to the same embodiment that shows a welding manner for a part of a square with alternate long and short dash lines of the differential gear unit in FIG. 1.
[FIG. 3] FIG. 3 is an enlarged cross-sectional view according to the same embodiment that shows a part of a square with alternate long and short dash lines in FIG. 2.
[FIG. 4] FIG. 4 is an enlarged cross-sectional view according to the same embodiment that shows a state before the welding in a part shown in FIG. 3.
[FIG. 5] FIG. 5 is a cross-sectional view according to the same embodiment that shows a manner of a welding quality inspection similar to FIG. 3.
[FIG. 6] FIG. 6 is a chart according to the same embodiment that shows a difference of the fatigue strengths after the welding between the conventional example and this embodiment.
[FIG. 7] FIG. 7 is a cross-sectional view according to the same embodiment that shows a manner in a case where the weld bead is not detected by the ultrasonic sensor.
[FIG. 8] FIG. 8 is a cross-sectional view according to the same embodiment that shows a manner in a case where the weld bead is detected by the ultrasonic sensor.
[FIG. 9] FIG. 9 is a cross-sectional view according to the same embodiment that shows a manner of the welding quality inspection according to a comparative example.
[FIG. 10] FIG. 10 is an enlarged cross-sectional view according to another embodiment that is similar to FIG. 3.
[FIG. 11] FIG. 11 is a cross-sectional view according to a conventional example that shows a joint structure of the flange part and the ring gear.

### MODE FOR CARRYING OUT THE INVENTION

Hereinafter, an embodiment of the present invention that embodies a joint structure by welding and a welding quality inspection method thereof will be described with reference to the drawings.

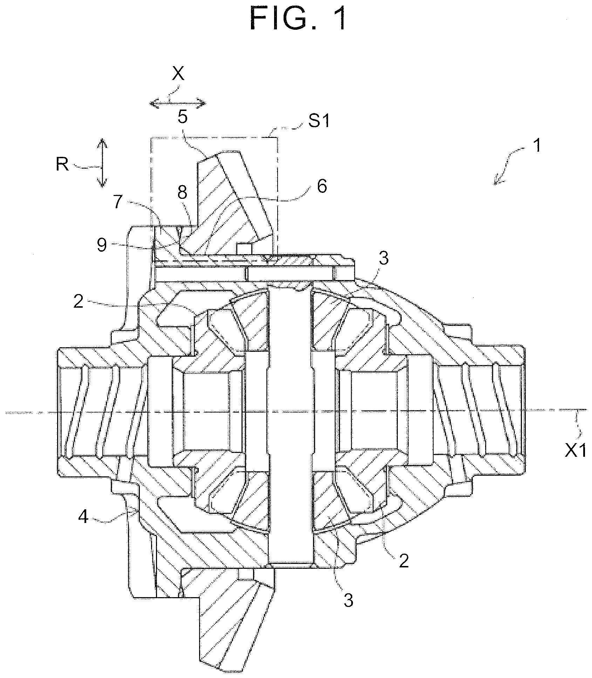

FIG. 1 shows a differential gear unit 1 for a vehicle according to this embodiment in a cross-sectional view. As shown in FIG. 1, the differential gear unit 1 includes a pair of side gears 2 that face to each other on an axis X1, a pair of pinions 3 that face to each other across the axis X1 and independently mesh with one of the pair of side gears 2, a differential case 4 that houses the side gears 2 and the pinions 3 in a manner where the side gears 2 and the pinions 3 are separately supported for rotation, and an annular ring gear 5 that is mounted and welded on an outer periphery of the differential case 4. The differential case 4 corresponds to the first member of the present invention and includes a cylindrical outer peripheral surface 6 and an annular flange part 7 that integrally protrudes from the cylindrical outer peripheral surface 6 to an outer peripheral side. This flange part 7 has a side face 8 that faces to the direction of the axis X1 and shaped into an annular ring. The ring gear 5 corresponds to the second member of the present invention and has an end face 9 that faces on the side face 8 of the flange part 7 and is shaped into an annular ring. The flange part 7 and the ring gear 5 are welded onto the side face 8 and end face 9.

In this embodiment, the differential case 4 is made of metals such as cast iron, for example, and produced through the processes such as casting, cutting, and grinding, for example. The ring gear 5 is made of metals such as alloy steel, for example, and produced through the processes such as cutting, gear cutting, and heat treatment, for example.

The differential gear unit 1 described above is provided in a transmission, a transfer, or a final drive (all not shown in the drawings), for example. The power that is input to the ring gear 5 is transferred to a pair of right and left drive wheels or a pair of front and rear drive axles, for example, as rotating members that are coupled to the side gears 2 while the rotational difference of the pair of side gears 2 is allowed.

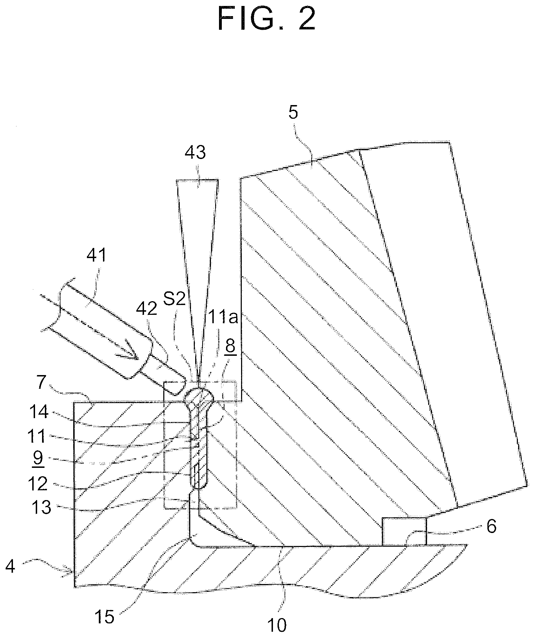

FIG. 2 shows a welding manner in an enlarged cross-sectional view for a part of a square S1 with alternate long and short dash lines of the differential gear unit 1 in FIG. 1. As shown in FIG. 2, the flange part 7 and the ring gear 5 in the differential case 4 includes a butted part 11 and two-stepped annular clearances 12, 13 that are adjacent to the butted part 11 on the side face 8 and the end face 9 that face to each other. While a weld wire 42 is supplied from a nozzle 41 along a joint 11a in the butted part 11 that is located on the opposite side of the two-stepped annular clearances 12, 13, a high-density laser beam 43 is applied from a laser oscillator (not shown), and thus the butted part 11 is welded. A weld bead 14 that is melted from the aforementioned joint 11 a into the two-stepped annular clearances 12, 13 is formed in the butted part 11 through the welding, and a joint structure by welding is formed accordingly.

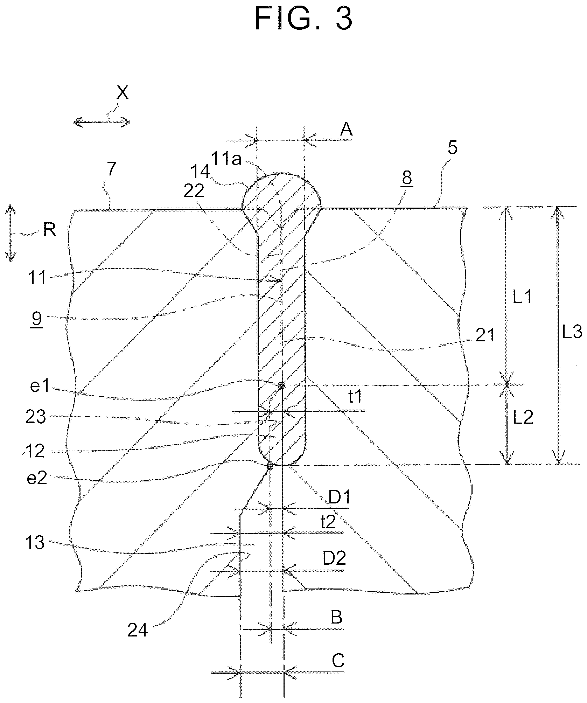

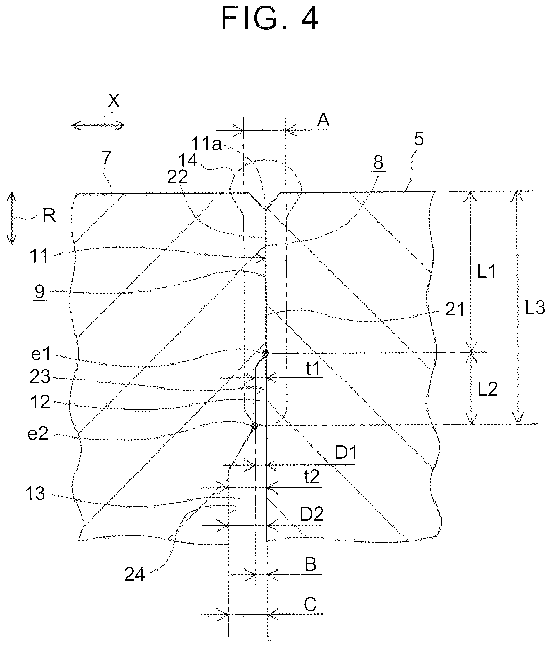

FIG. 3 shows a part of a square S2 with alternate long and short dash lines in FIG. 2 in an enlarged cross-sectional view. FIG. 4 shows a state before the welding in a part shown in FIG. 3 in an enlarged cross-sectional view. As shown in FIG. 4, between the side face 8 of the flange part 7 and the end face 9 of the ring gear 5 that face to each other, the butted part 11 that is shaped into an annular ring is provided on the outer peripheral side in radial directions R, and the two-stepped annular clearances 12, 13 are provided adjacent to the butted part 11. The two-stepped annular clearances 12, 13 include a first annular clearance 12 that is adjacent to an inner peripheral edge e1 in the radial direction R of the butted part 11 and a second annular clearance 13 that is adjacent to an inner peripheral edge e2 in the radial direction R of the first annular clearance 12.

The butted part 11 includes a pair of abutting surfaces 21, 22 that face to each other in directions X of the axis X1 before the welding and abut against each other. The abutting surfaces 21, 22 shown in FIG. 4 are illustrated with an alternate long and two short dashes line in FIG. 3. The butted part 11, the first annular clearance 12, and the second annular clearance 13 are concentrically formed in sequence. Between the side face 8 of the flange part 7 and the end face 9 of the ring gear 5 here, other parts than the butted part 11 are spaced apart from each other. That is to say, between the side face 8 of the flange part 7 and the end face 9 of the ring gear 5, other parts than the butted part 11 includes no abutting surface. Furthermore, as shown in FIGs. 2 and 3, in the butted part 11 (a part of the abutting surfaces 21, 22), the weld bead 14 that reaches the first annular clearance 12 is continuously formed in the circumferential direction.

As shown in FIGs. 3 and 4, the end face 9 of the ring gear 5 is a Bat surface that is flush with the abutting surface 22. As shown in FIG. 2, the end face 9 is curved as it reaches the inner side in the radial direction R and then continues to an inner peripheral surface 10 of the ring gear 5. On the other hand, as shown in FIGs. 3 and 4, the side face 8 of the flange part 7 includes the abutting surface 21 and two-stepped annular recesses 23, 24 that are formed adjacently to the inner peripheral edge (inner peripheral edge of the butted part 11) e1 of the abutting surface 21. That is to say, a first annular recess 23 that is formed adjacently to the inner peripheral edge (that is also the inner peripheral edge of the butted part 11) e1 of the abutting surface 21 and a second annular recess 24 that is formed adjacently to the inner peripheral edge (that is also the inner peripheral edge of the first annular clearance 12) e2 of the first annular recess 23 are included. The first annular recess 23 has the maximum depth t1 in the direction X of the axis X1, and the second annular recess 24 has the maximum depth t2 in the direction X of the axis X1. The maximum depth t2 of the second annular recess 24 is greater than the maximum depth t1 of the first annular recess 23. A part of the first annular recess 23 adjacent to the abutting surface 21 is tapered toward the inner side in the radial direction R. Similarly, a part of the second annular recess 24 adjacent to the first annular recess 23 is tapered toward the inner side in the radial direction R. As shown in FIG. 2, the inner peripheral side of the second annular recess 24 is smoothly curved and continues toward the cylindrical outer peripheral surface 6 of the differential case 4.

In this way, as shown in FIG. 2, the butted part 11, the first annular clearance 12 that is adjacent to the inner peripheral edge e1 of the butted part 11, the second annular clearance 13 that is adjacent to the inner peripheral edge e2 of the first annular clearance 12, and a third annular clearance 15 that is adjacent to the second annular clearance 13 and has a greater dimension in the direction X of the axis X1 than that of the second annular clearance 13 are formed between the side face 8 of the flange part 7 and the end face 9 of the ring gear 5. That is to say, the side face 8 of the flange part 7 and the end face 9 of the ring gear 5 are formed to be spaced apart from each other on the inner peripheral side from the second annular clearance 13.

In FIGs. 3 and 4 here, the length of two abutting surfaces 21, 22 that constitute the butted part 11 in the radial direction R is assumed to be "L1", the length of the first annular recess 23 in the radial direction R is assumed to be "L2", and the total length of two lengths L1, L2 is assumed to be "L3". In this case, the length L1 is set to be equal to the lower limit of a required weld depth that is determined in advance in the radial direction R. Furthermore, the total length L3 is set to be equal to the upper limit of the required weld depth that is determined in advance in the radial direction R. This total length L3 is set such that the length of the weld bead 14 in the radial direction R (leg length) becomes the minimum length in order to reduce the output capacity of the laser oscillator. In this embodiment, as shown in FIGs. 3 and 4, when the width of the weld bead 14 (weld bead width) is assumed to be "A", the width of the first annular clearance 12 that is a first step of the two-stepped clearances 12, 13 is assumed to be "B", and the width of the second annular clearance 13 that is a second step of the two-stepped clearances 12, 13 is assumed to be "C", the relation of "B < A/2 < C" is determined. Furthermore, as shown in FIGs. 3 and 4, the width B of the first annular clearance 12 is set to be equal to a first dimension D1 that is filled by the welding, and the width C of the second annular clearance 13 is set to be equal to a second dimension D2 that is larger than the first dimension D1 and not filled by the welding. Here, the width "C" of the second annular clearance 13 is set to be larger than the half of the weld bead width A in order to prevent burn-through of a molten pool.

FIG. 3 shows one example of a welding state. FIG. 3 shows a state in which a weld penetration depth of the weld bead 14 in the radial direction R conforms to the depth corresponding to the total length L3. The maximum length t1 of the first annular recess 23 in the direction X of the axis X1 that conforms to the width B of the first annular clearance 12 is set to be smaller than one-half of the weld bead width A. Thus, in this embodiment, the first annular recess 23 is filled with the weld bead 14 up to the inner peripheral edge e2. That is to say, the maximum length t1 of the first annular recess 23 in the direction X of the axis X1 is set to be filled with the weld bead 14. The weld penetration depth of the weld bead 14 becomes equal to the weld depth of the flange part 7 and the ring gear 5 in the radial direction R (weld leg length) when the weld penetration depth is higher than or equal to the lower limit of the required weld depth and lower than or equal to the upper limit of the required weld depth.

By providing the first annular recess 23 as described above, the lower limit of the required weld depth conforms to the position of the inner peripheral edge e1 of the butted part 11. Furthermore, the first annular clearance 12 that is set to the first dimension D1 filled by the welding is provided between the side face 8 of the flange part 7 and the end face 9 of the ring gear 5.

Furthermore, by providing the second annular recess 24 as described above, the upper limit of the required weld depth conforms to the position of the inner peripheral edge e2 of the first annular clearance 12. In addition, the second annular clearance 13 that is set to the second dimension D2 larger than the first dimension D1 and not filled by the welding is provided between the side face 8 of the flange part 7 and the end face 9 of the ring gear 5.

In FIG. 2, the output of the laser beam 43 is experimentally determined and set in advance such that a mean value of the dispersion range of the weld depth of the weld bead 14 approximately conforms to the upper limit of the required weld depth, for example. Furthermore, the output of the laser beam 43 is experimentally determined and set in advance such that the minimum value of the dispersion range of the weld penetration depth of the weld bead 14 formed by the laser beam welding becomes larger than the lower limit of the required weld depth, for example. An outer peripheral edge of the first annular clearance 12, that is, the inner peripheral edge e1 of the butted part 11 conforms to the position corresponding to the lower limit of the required weld depth. The welding between the flange part 7 and the ring gear 5 by the laser beam 43 continuously forms the weld bead 14 with the depth, which reaches from the outer peripheral edge of the flange part 7 and the ring gear 5 to the first annular clearance 12, along the circumferential direction of the flange part 7 and the ring gear 5. Thus, even if the weld penetration depth of the weld bead 14 may vary and the weld penetration depth may become shallower than the upper limit of the required weld depth, the butted part 11 can continuously be welded in the circumferential direction of the flange part 7 and the ring gear 5 so as to penetrate in the radial direction R.

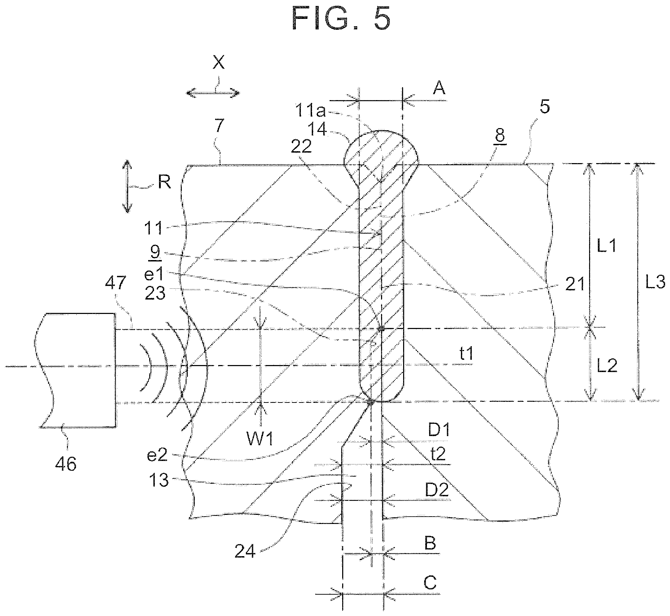

FIG. 5 shows a manner of a welding quality inspection in the cross-sectional view similar to FIG. 3. In this welding quality inspection, an ultrasonic inspection that is one technique for a nondestructive inspection is used, and in FIG. 5, an ultrasonic sensor 46 is brought into contact with the side face opposite to the side face 8 of the flange part 7, and then an ultrasonic beam 47 is radiated from the sensor 46 to the side face 8 that is the inside of the flange part 7. At that time, a discontinuity that is positioned adjacently to the inner peripheral side of the weld bead 14, that is, a reflected wave of the ultrasonic beam 47 in the first annular clearance 12 is detected. Then, by checking to see the position of the outer peripheral edge (that is also the inner peripheral edge of the butted part 11) e1 of the first annular clearance 12 in the radial direction R, the position of an inner peripheral end of the weld bead 14 that conforms to the weld penetration depth of the weld bead 14 is measured. When the position of the inner peripheral end of the weld bead 14 becomes higher than or equal to the lower limit of the required weld depth, the welding quality can be determined as a good "penetration welding". Furthermore, when the position of the inner peripheral end of the weld bead 14 becomes lower than the lower limit of the required weld depth, the welding quality can be determined as a defective "non-penetration welding".

In this embodiment, as shown in FIG. 5, one end in an inspection range by the ultrasonic sensor 46, that is, an upper end of the ultrasonic beam 47 is conformed to a boundary between the butted part 11 and the first annular clearance 12, that is, the inner peripheral edge e1 of the butted part 11. The length of the first annular clearance 12, that is, the length L2 in the radial direction R is set to be greater than or equal to the width in the inspection range by the ultrasonic sensor 46, that is, a width w1 of the ultrasonic beam 47. In this embodiment, the width w1 of the ultrasonic beam 47 is set to be a difference between the upper limit and the lower limit of the required weld depth (L3 - L1 = L2). Accordingly, an inspection error by the ultrasonic sensor 46 is determined to be fallen between the upper limit and the lower limit of the required weld depth.

As one example, in this embodiment, the length L1 of the butted part 11 in the radial direction R in FIG. 5 can be set to "5.0 (mm)" that is a lower limit leg length of the weld bead 14 conforming to a required strength. Furthermore, the length L3 in the radial direction R that is a sum of the butted part 11 and the first annular clearance 12 can be set to "6.0 (mm)" that is an upper limit leg length of the weld bead 14. The length L2 of the first annular clearance 12 in the radial direction R can be set to "1.0 (mm)" that is a detection capability of the existing ultrasonic sensor 46 ± "0.5 (mm)". In addition, an inspection position of the ultrasonic sensor 46 can be set to an intermediate position of the first annular clearance 12 in the radial direction R. In other words, a center position of the ultrasonic sensor 46 is conformed to the depth of "5.5 (mm)" from the outer peripheral edge of the flange part 7 to the radial direction R. In this case, for example, the weld bead width A can be set to "1.0 (mm)", the width B of the first annular clearance 12 can be set to "0.4 (mm)", and the width C of the second annular clearance 13 can be set to "1.0 (mm)".

According to the joint structure by the welding in this embodiment as described above, when the width of the weld bead 14 is assumed to be "A", the width of the first annular clearance 12 is assumed to be "B", and the width of the second annular clearance 13 is assumed to be "C", the relation among them is determined to be "B < A/2 < C". Thus, the weld penetration depth of the weld bead 14 becomes greater than or equal to the length L1 of the butted part 11 (abutting surfaces 21, 22) and less than or equal to the total length L3 of the length L1 of the butted part 11 (abutting surfaces 21, 22) and the length L2 of the first annular clearance 12. Furthermore, between the side face 8 of the flange part 7 and the end face 9 of the ring gear 5, other parts than the butted part 11 are spaced apart from each other. Accordingly, the butted part 11 can be penetrated and welded with the weld bead 14, and the abutting surface disappears between the side face 8 and the end face 9 that are described above after the welding. Thus, unlike the conventional example, the abutting surfaces do not press against each other between the side face 8 of the flange part 7 and the end face 9 of the ring gear 5 after the welding, and no residual stress in a pulling direction is produced between the side face 8 and the end face 9. As a result, between the side face 8 of the flange part 7 and the end face 9 of the ring gear 5, fatigue strength of the joint structure by the welding can be improved.

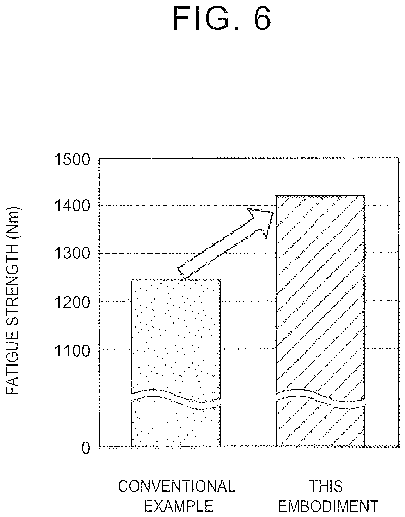

FIG. 6 shows a difference of the fatigue strengths after the welding between the conventional example and this embodiment in a chart. This chart reveals that the fatigue strength in this embodiment increases about "1.2 times" greater than that in the conventional example in which the butted part remains.

In this embodiment, even if the output of the laser beam 43 for welding may vary slightly, the length of the weld bead 14 in the radial direction R (leg length) becomes the length between the lower limit and the upper limit of the required weld depth. Thus, the butted part 11 (abutting surfaces 21, 22) is prevented from remaining, and the robustness of the leg length of the weld bead 14 can be improved.

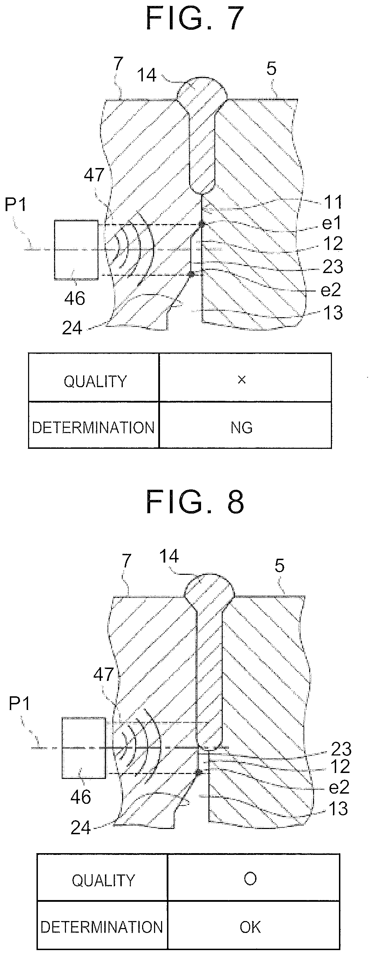

Furthermore, according to the welding quality inspection method in this embodiment, one end in the inspection range by the ultrasonic sensor 46 (upper end of the ultrasonic beam 47 in FIG. 5) is conformed to the boundary between the butted part 11 and the first annular clearance 12, that is, the inner peripheral edge e1 of the butted part 11. Thus, when the butted part 11 is not penetrated and welded with the weld bead 14, the weld bead 14 is not detected by the ultrasonic sensor 46. FIG. 7 shows a manner in this case in a cross-sectional view. In this case, the welding quality is determined as the defective "non-penetration welding", and the determination is made as "NG". In contrast, when the butted part 11 is penetrated and welded with the weld bead 14, the weld bead 14 is detected by the ultrasonic sensor 46. FIG. 8 shows a manner in this case in a cross-sectional view. In this case, the welding quality is determined as the good "penetration welding", and the determination is made as "OK". As described above, in this embodiment, the "penetration welding" can correctly be determined in accordance with good or bad welding quality, and the determination accuracy of the welding quality can be improved. This reduces the erroneous determination due to variations in the welding quality inspection that uses the ultrasonic sensor 46.

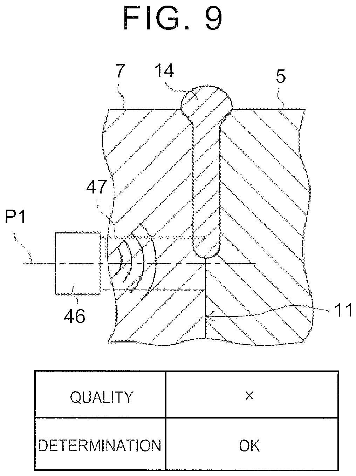

FIG. 9 shows a manner of the welding quality inspection according to a comparative example in a cross-sectional view. In this comparative example, only the butted part 11 is provided between the facing surfaces of the flange part 7 and the ring gear 5, and the two-stepped clearances 12, 13 are not provided. In this case, even if the leg length of the weld bead 14 does not reach a required weld depth position (center position of the ultrasonic sensor 46) P1 and the welding quality is defective, when the ultrasonic beam 47 is applied to the lower end of the weld bead 14, the determination may be made as the weld bead 14 is detected and result in "OK", and thus the determination accuracy has been poor. In contrast, the determination accuracy for the welding quality is improved in this embodiment.

Furthermore, in this embodiment, the length L2 of the first annular clearance 12 in the radial direction R is set to be larger than or equal to the width w1 in the inspection range by the ultrasonic sensor 46. Thus, although the weld bead 14 extending to the first annular clearance 12 is detected by the ultrasonic sensor 46, even if the actual weld bead 14 is shortened due to influence of disturbance, the possibility that the weld bead 14 is positioned in all inspection ranges (most part) by the ultrasonic sensor 46 increases, and if the weld bead 14 is positioned in all inspection ranges (most part), the possibility of the erroneous detection in which the weld bead 14 does not exist decreases. Therefore, the determination accuracy for the welding quality can be improved further, and consequently, the accuracy of the welding quality inspection is improved.

This embodiment has the functional effects as described above in relation to the welding quality inspection, and thus the following collateral functional effects can be obtained. That is to say, the output of the laser oscillator is not required to increase more than necessary at the welding in order to avoid the leg length variations of the weld bead 14, and thus a welding cost can be reduced. Furthermore, because the variations of the leg length of the weld bead 14 are permissible to some extent, equipment for controlling the output of the laser oscillator can be omitted. In addition, a high-accuracy sensor more than necessary is not required for the ultrasonic sensor 46. Additionally, because the erroneous determination of the welding quality can be reduced, defect losses during a process can be eliminated for a product in which the welding quality is determined as OK.

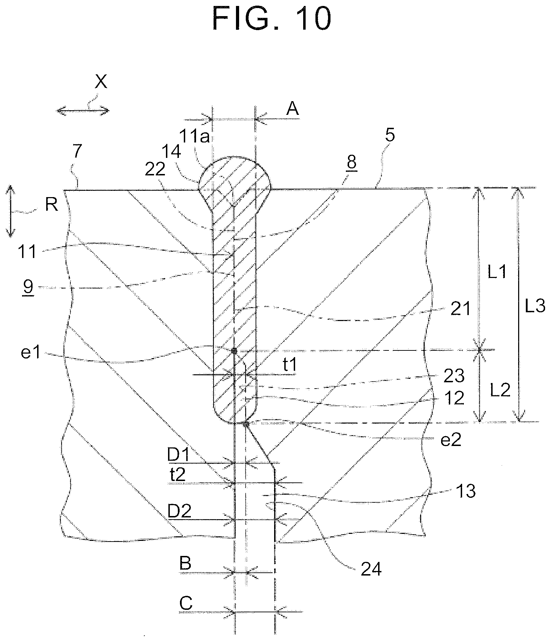

The present invention is not limited to the embodiment described above, and a part of the structure can appropriately be changed without departing from the scope of the present invention and embodied as follows.
(1) In the embodiment described above, as shown in FIG. 3, by forming the two-stepped annular recesses 23, 24 adjacent to the butted part 11 on the side face 8 of the flange part 7 only, the two-stepped annular clearances 12, 13 are provided. In contrast, as shown in FIG. 10, by forming the two-stepped annular recesses 23, 24 adjacent to the butted part 11 on the end face 9 of the ring gear 5 only, the two-stepped annular clearances 12, 13 may be provided. Or, by forming the two-stepped annular recesses adjacent to the butted part on both of the side face of the flange part and the end face of the ring gear, the two-stepped annular clearances can be provided.
(2) In the embodiment described above, although the present invention is embodied in the differential gear unit 1 for the vehicle, the present invention may be embodied in other machines and components than the differential gear unit.

### INDUSTRIAL APPLICABILITY

The present invention relates to the production of machines and components and can be used to the welding of the joint structure.

### DESCRIPTION OF REFERENCE NUMERALS

- 4: differential case (first member)
- 5: ring gear (second member)
- 7: flange part
- 8: side face (facing surface)
- 9: end face (facing surface)
- 11: butted part
- 11a: joint
- 12: first annular clearance (first level clearance)
- 13: second annular clearance (second level clearance)
- 14: weld bead
- 21: abutting surface
- 22: abutting surface
- 23: first annular recess
- 24: second annular recess
- 46: ultrasonic sensor
- 47: ultrasonic beam

## Claims

1. A joint structure by welding in which a butted part (11) is provided between facing surfaces (8, 9) of a first member (4) and a second member (5), two-stepped clearances (12, 13) adjacent to the butted part are provided, and a weld bead (14) that is melted from a joint (11a) of the butted part which is positioned on an opposite side of the two-stepped clearances into the two-stepped clearances is formed in the butted part by welding, the joint structure **characterized in that**:
other parts than the butted part are spaced apart from each other between the facing surfaces;
a width of the weld bead (A), a width of a first level clearance (B) of the two-stepped clearances that is adjacent to the butted part, and a width of a second level clearance (C) of the two-stepped clearances that is adjacent to the first level clearance have the relation of the width of the first level clearance (B) < the width of the weld bead (A) /2 < the width of the second level clearance (C), and
a weld penetration depth of the weld bead becomes greater than or equal to a length of the butted part (L1) and less than or equal to a total length (L3) of the butted part and the first level clearance.

2. The joint structure by welding according to claim 1, wherein the facing surfaces (8, 9) are formed into an annular shape; the butted part (11), the first level clearance (12), and the second level clearance (13) are concentrically formed in sequence; and the weld bead (14) that reaches the first level clearance (12) is continuously formed in the butted part in a circumferential direction.

3. A welding quality inspection method by using an ultrasonic sensor for the joint structure by welding according to claim 1 or 2, **characterized by** comprising
conforming one end in an inspection range by the ultrasonic sensor (46) to a boundary between the butted part and the first level clearance.

4. The welding quality inspection method according to claim 3, wherein a length of the first level clearance (L2) is made to be larger than or equal to the width in an inspection range by the ultrasonic sensor.

## Patentansprüche

1. Eine geschweißte Verbindungsstruktur, in welcher ein aneinander stoßender Teil (11) zwischen zueinander weisenden Oberflächen (8, 9) eines ersten Teils (4) und eines zweiten Teils (5) vorgesehen ist, zweistufige Zwischenräume (12, 13), die benachbart zu dem aneinander stoßenden Teil (11) sind, vorgesehen sind, und eine Schweißraupe (14), die von einer Verbindung (11 a) des aneinander stoßenden Teils, welche an einer zu den zweistufigen Zwischenräumen entgegen gesetzten Seite positioniert ist, in die zweistufigen Zwischenräume geschmolzen ist, in dem aneinander stoßenden Teil durch Schweißen gebildet ist, wobei die Verbindungsstruktur **dadurch gekennzeichnet ist, dass**:
andere Teile als der aneinander stoßende Teil zwischen den zueinander weisenden Oberflächen voneinander weg beabstandet sind,
eine Breite der Schweißraupe (A), eine Breite eines Zwischenraums (B) mit einem ersten Niveau der zweistufigen Zwischenräume, der zu dem aneinander stoßenden Teil benachbart ist, und eine Breite eines Zwischenraums (C) mit einem zweiten Niveau der zweistufigen Zwischenräume, der zu dem Zwischenraum (B) mit dem ersten Niveau benachbart ist, die Beziehung aufweisen, wonach die Breite des Zwischenraums (B) mit dem ersten Niveau < die Breite der Schweißraupe (A) /2 < die Breite des Zwischenraums (C) mit dem zweiten Niveau ist, und
eine Schweißpenetrationstiefe der Schweißraupe größer als eine Länge (L1) des aneinander stoßenden Teils wird, oder gleich dieser wird, und kleiner als eine gesamte Länge (L3) des aneinander stoßenden Teils und des Zwischenraums mit dem ersten Niveau wird, oder gleich dieser wird.

2. Die geschweißte Verbindungsstruktur gemäß dem Anspruch 1, wobei die zueinander weisenden Oberflächen (8, 9) in einer ring-artigen Form gebildet sind, der aneinander stoßende Teil (11), der Zwischenraum (12) mit dem ersten Niveau und der Zwischenraum (13) mit dem zweiten Niveau konzentrisch der Reihe nach gebildet sind, und die Schweißraupe (14), welche den Zwischenraum (12) mit dem ersten Niveau erreicht, in dem aneinander stoßenden Teil in einer Umfangsrichtung kontinuierlich gebildet ist.

3. Ein Schweißqualitätsinspektionsverfahren unter Verwenden eines Ultraschallsensors für die geschweißte Verbindungsstruktur gemäß dem Anspruch 1 oder 2 ist **dadurch gekennzeichnet, dass** es aufweist:
ein Anpassen eines Endes in einem Inspektionsbereich durch den Ultraschallsensor (46) an eine Grenze zwischen dem aneinander stoßenden Teil und dem Zwischenraum mit dem ersten Niveau.

4. Das Schweißqualitätsinspektionsverfahren gemäß dem Anspruch 3, wobei eine Länge des Zwischenraums (L2) mit dem ersten Niveau gemacht ist, um größer als die Breite in einem Inspektionsbereich durch den Ultraschallsensor zu sein, oder gleich dieser zu sein.

## Revendications

1. Structure de joint formée par soudure dans laquelle une partie de contact (11) est prévue entre des surfaces en regard (8, 9) d'un premier élément (4) et d'un second élément (5), des dégagements à deux étages (12, 13) adjacents à la partie de contact sont prévus, et une bille de soudure (14) qui est fondue à partir d'un joint (lla) de la partie de contact, qui est positionné sur un côté opposé vis-à-vis des dégagements à deux étages, dans les dégagements à deux étages est formée dans la partie de contact par soudure, la structure de joint étant **caractérisée en ce que** :
les parties autres que la partie de contact sont espacées les unes des autres entre les surfaces en regard ;
une largeur de la bille de soudure (A), une largeur d'un dégagement de premier niveau (B) parmi les dégagements à deux étages qui est adjacent à la partie de contact, et une largeur d'un dégagement de second niveau (C) parmi les dégagements à deux étages qui est adjacent au dégagement de premier niveau ont une relation telle que la largeur du dégagement de premier niveau (B) < la largeur de la bille de soudure (A)/2 < la largeur du dégagement de second niveau (C), et
une profondeur de pénétration de soudure de la bille de soudure devient supérieure ou égale à une longueur de la partie de contact (L1) et inférieure ou égale à une longueur totale (L3) de la partie de contact et du dégagement de premier niveau.

2. Structure de joint formée par soudure selon la revendication 1, dans laquelle les surfaces en regard (8, 9) sont dotées d'une forme annulaire ; la partie de contact (11), le dégagement de premier niveau (12) et le dégagement de second niveau (13) sont formés l'un après l'autre de manière concentrique ; et la bille de soudure (14) qui atteint le dégagement de premier niveau (12) est formée de façon continue dans la partie de contact dans une direction circonférentielle.

3. Procédé d'inspection de la qualité d'une soudure au moyen d'un capteur ultrasonore pour la structure de joint formée par soudure selon la revendication 1 ou 2, **caractérisé en ce qu'**il comprend
adapter une extrémité dans une plage d'inspection par le capteur ultrasonore (46) à une limite entre la partie de contact et le dégagement de premier niveau.

4. Procédé d'inspection de la qualité d'une soudure selon la revendication 3, dans lequel une longueur du dégagement de premier niveau (L2) est définie de façon à être supérieure ou égale à la largeur dans une plage d'inspection par le capteur ultrasonore.
